# EUROPÄISCHE PATENTANMELDUNG

(11) **EP 3 076 343 A1**
(43) Veröffentlichungstag der Anmeldung: **05.10.2016**
(21) Anmeldenummer: 16163502.4
(22) Anmeldetag: 01.04.2016
(51) Int. Cl.: G06N 5/02, G06F 17/30

(54) **VERFAHREN ZUR ZUORDNUNG SPRACHLICHER EINGABEN**

(30) Priorität: 02.04.2015 EP 15162429
(71) Anmelder: Lüthi, Dominic, 1200 Wien (AT)
(72) Erfinder: Lüthi, Dominic, 1200 Wien (AT)
(74) Vertreter: Patentanwälte Puchberger, Berger und Partner

(57) **Zusammenfassung**

Die Erfindung betrifft ein rechnerimplementiertes Verfahren zur Zuordnung einer ersten Intention in Form einer ersten sprachlichen Eingabe in einen Rechner zu zumindest einer passenden Intention in Form einer zweiten sprachlichen Eingabe in einen Rechner, wobei die Intentionen als Datenobjekte implementiert sind und jeweils zumindest ein Intentionsobjekt, einen Handlungstyp und zumindest eine Intentionsfacette umfassen, und wobei das Verfahren eine Analysephase und eine darauf folgende Suchphase umfasst, sowie ein System zur Ausführung dieses Verfahrens.

## Beschreibung

Die Erfindung betrifft ein rechnerimplementiertes Verfahren zur Zuordnung einer ersten Intention in Form einer ersten sprachlichen Eingabe in einen Rechner zu zumindest einer passenden Intention in Form einer zweiten sprachlichen Eingabe in einen Rechner.

Das heutige Internet ist ein weltweiter Verbund von Rechnernetzwerken und erlaubt vermittels verschiedener Protokolle den gegenseitigen Austausch von Daten, beispielsweise über das HTTP(S)-Protokoll den Aufruf elektronischer Hypertext-Dokumente (Webseiten), die in ihrer Gesamtheit eines durch Hyperlinks verknüpften Systems wiederum das World Wide Web ausmachen. Dieses System kennzeichnet, dass es jedwede Art von Information aggregieren und über Browser und Suchmaschinen wieder zur Verfügung stellen kann.

Als nachteilig erweist sich, dass stets nur elementare Information und damit auch stets nur Content verarbeitet wird, der wiederum nur über Suchmaschinen nutzbar gemacht werden kann. Dabei entsprechen auch nur etwa 40 Prozent aller Zugänge zum World Wide Web der rein informationsorientierten Suche und sind die restlichen 60 Prozent eigentlich Intent, also intentionsbezogen, insbesondere transaktionsbezogen.

Als besonders nachteilig hat sich hierbei erwiesen, dass die heutige Architektur des World Wide Webs über die einer interaktiven Plattform kaum hinausreicht und vor allem zwingt, höhere emergente Erscheinungsformen von Information, wie beispielsweise Intentionen, auf elementare Informationen zurückzuführen.

Dazu ein erläuterndes Beispiel: die Intention X von Nutzer A umfasst, dass er eine bestimmte Immobilie hat und einen bestimmten Käufer für den Betrag Z dafür sucht. Dieser Nutzer A begibt sein Haben, die Immobilie, einzeln und als Content auf eine entsprechende Transaktionsplattform im Internet und macht sich gleichzeitig per Suchmaschine auf die Suche nach einem Käufer, voraussetzend, dass dieser potentielle Käufer sein Gesuch zuvor auf einer entsprechenden Plattform publik gemacht hat.

Die Intention Y von einem anderen Nutzer B umfasst, dass er eine solche Immobilie sucht und dafür einen Betrag Z zur Verfügung hat. Er veröffentlicht sein Gesuch ebenfalls einzeln auf einer Transaktionsplattform im Internet und sucht wiederum begleitend per Suchmaschine nach der entsprechenden Immobilie.

Dass die Intentionen X und Y sich finden und zeitnah miteinander reagieren können, ist unwahrscheinlich und mit erheblichem Aufwand verbunden.

Der Erfindung liegen demnach zumindest die Aufgaben zugrunde, höherwertige Evolutionsstufen von Information, beispielsweise Intentionen, als solche überhaupt zu entdecken, diese als in ihrem gesamten semantischen Bedeutungsgefüge automatisiert verarbeitbar aufzubereiten, in einer entsprechenden Engine ("UNIFIELD-Engine") im Sinne ihrer Intentionalität miteinander geführt reagieren zu lassen, wo eine solche Reaktion angezeigt ist und die jeweils optimale Passung zweier oder mehrerer Intentionen zu finden sowie den Urhebern der Intentionen, den jeweiligen Nutzern, als Ergebnis aktiv zu liefern und die Möglichkeit einer Verbindung derer in ihrem gemeinsamen Anliegen anzubieten.

Diese Aufgaben werden erfindungsgemäß durch ein Verfahren gemäß Anspruch 1 und ein System gemäß Anspruch 14 gelöst.

Eine Intention ist in diesem Zusammenhang dann gegeben, wenn jemandes Streben sich auf etwas Spezifisches richtet, und ist demnach der Ausdruck eines Anliegens in Form eines ganz bestimmten Vorhabens, dessen Entsprechung für den Intendanten eine Wunscherfüllung bzw. Bedürfnisbefriedigung bedeutet.

Eine Intention, die als sprachliche oder schriftliche Eingabe, beispielsweise in Form eines Intentionstextes, vorliegt, kann als semantisches Netz dargestellt werden. Meist wird ein semantisches Netz durch einen Graphen repräsentiert. Die Knoten des Graphen stellen dabei die Begriffe der sprachlichen Eingabe dar. Beziehungen zwischen den Begriffen werden durch die Kanten des Graphen realisiert.

Eine Intention hat stets eine Zahl von obligatorischen Elementen. So hat jede Intention einen Intentionsträger, den Intendanten, dies ist die Person, die eine Handlungsabsicht hat oder übermittelt, meist in der Form "Ich" oder "Wir".

Erfindungsgemäß haben die betrachteten Intentionen darüber hinaus stets einen Handlungstyp, der das "wollen" des Intendanten spezifiziert. Der Handlungstyp kann als sprachliche Eingabe unterschiedlichste Ausprägungen annehmen, beispielsweise "suche", "biete", "verkaufe", "verleihe", "verschenke", oder eine Vielzahl anderer Verben, die in vielen unterschiedlichen Verbformen vorliegen können.

Die betrachteten Intentionen haben darüber hinaus stets ein Intentionsobjekt, nämlich jenes Objekt, das gesucht oder angeboten wird, beispielsweise "Ferienhaus" oder "Oldtimer".

Daneben weisen die Intentionen der Benutzer in der Regel eine Vielzahl von weiteren Elementen auf, die im Folgenden als Intentionsfacetten bezeichnet werden. Dabei kann es sich um eine Form der Kompensation handeln, also insbesondere einen Preis, beispielsweise "maximal 500 Euro" oder "um 690 Euro".

Es können auch zeitliche Angaben wie "im Sommer", örtliche Angaben wie "in Bari", Angaben über das gesuchte Objekt wie "ein Bruchsteinhaus" oder Angaben über den gewünschten Transaktionspartner vorgesehen sein.

Jede Intentionsfacette kann für sich selbst weitere Beschreibungen oder Spezifizierungen aufweisen, beispielsweise "im Sommer, am liebsten im Juli" oder "in Bari oder in der Umgebung von Bari".

Das erfindungsgemäße Verfahren umfasst zumindest folgende Schritte:
Zunächst werden Intentionen in Form sprachlicher Eingaben in einen Rechner eingegeben, wobei dies durch Eintippen, automatische Extraktion von Webseiten, Spracheingabe oder andere technische Mittel erfolgen kann.

Die eingegebenen Intentionen werden als Datenobjekte gespeichert und umfassen jeweils zumindest ein Intentionsobjekt, einen Handlungstyp und zumindest eine Intentionsfacette. Alle diese Elemente der Intention werden ebenfalls als Datenobjekte gespeichert.

Das erfindungsgemäße Verfahren umfasst eine Analysephase und eine darauf folgende Suchphase. Vorab werden in der Analysephase Datenbestände, insbesondere semantische Netze, aufgebaut und indiziert, die in der Suchphase zur Ermittlung passender Intentionen schnell abgefragt werden können.

In der Analysephase wird zunächst aus jeder eingegebenen Intention in Form einer sprachlichen Eingabe und dem entsprechend gebildeten Datenobjekt durch einen semantischen Interpreter ein semantisches Netz gebildet. Das semantische Netz wird ebenfalls als Datenobjekt gespeichert. Aus diesem semantischen Netz werden dann der konkrete Handlungstyp der Intention bestimmt, die enthaltenen Intentionsfacetten extrahiert und in einer Intentionsfacetten-Datenbank gespeichert, sowie das Intentionsobjekt bestimmt und in einer Intentionsobjekt-Datenbank gespeichert.

Schließlich wird das semantische Netz in einer Graph-Datenbank abgelegt und zur schnelleren Auffindung durch ein Graph-Indizierungsverfahren indiziert, wobei aus dem Stand der Technik geeignete Graph-Indizierungsverfahren ausgewählt werden, die es in der Suchphase erlauben, passende semantische Netze möglichst schnell zu ermitteln. Erfindungsgemäß ist vorgesehen, dass diese Analysephase vorab mit einer Vielzahl von Intentionen durchlaufen wird. Dabei kann es sich in konkreten Ausführungsbeispielen um Hunderttausende oder Millionen Intentionen handeln, welche die Analysephase durchlaufen und als semantische Netze gespeichert und indiziert werden.

Wenn der Benutzer nun eine konkrete Intention in Form einer sprachlichen Eingabe eingibt und passende Intentionen sucht, wird die Analysephase zunächst mit dieser zuzuordnenden Intention durchlaufen. Danach wird eine Suchphase gestartet, in der zunächst zum ermittelten Handlungstyp der zuzuordnenden Intention, beispielsweise "suche", eine Vielzahl komplementärer Handlungstypen, beispielsweise "vermiete", "verkaufe", "verleihe", "verschenke" bestimmt werden. Danach werden aus den in der Graph-Datenbank gespeicherten semantischen Netzen jene passenden Netze ausgewählt, welche einen der ermittelten komplementären Handlungstypen aufweisen. Die diesen passenden Netzen entsprechenden sprachlichen Eingaben werden danach ausgegeben.

Erfindungsgemäß kann vorgesehen sein, dass in der Analysephase das Intentionsobjekt der zuzuordnenden Intention dadurch bestimmt wird, indem das erstellte semantische Netz um den ermittelten Handlungstyp und alle ermittelten Intentionsfacetten reduziert wird.

Erfindungsgemäß kann vorgesehen sein, dass als Intentionsfacetten zumindest eine Kompensation, vorzugsweise ein Preis, eine zeitliche Einschränkung, eine örtliche Einschränkung, und vorzugsweise ein gewünschter Intentionspartner vorgesehen sind.

Die Facette Kompensation kann im einfachsten Fall als Zahl plus Währungseinheit genannt sein ("Ich biete dieses Regal für 50 EUR an."). Fehlende Währungseinheiten ("Das soll nicht mehr als 100 kosten") können inferiert werden, gewünschte Intervalle erkannt werden. Umrechnungen zwischen Währungseinheiten können automatisch zu geeigneten Zeitpunkten vorgenommen werden. Die Verknüpfung von Preisen mit Zeitintervallen ("500 USD pro Quartal", "200 Franken monatlich") und von Preisen mit Stückzahlen ("89 ct pro 10 Stück") können erkannt und beim Matching in der Suchphase entsprechend normalisiert bzw. berechnet werden.

Zur Facette Zeit gehören Einschränkungen der folgenden Art: "Biete ein Ferienhaus in Venetien im August / im Sommer / im 2. Quartal / ab März / bis Oktober an." In der Suchphase können Passungen mit einer entsprechenden Zeitlogik bewertet werden.

Die Facette Partner enthält Anforderungen an den gewünschten Intentionspartner. Auch diese können sprachlich ganz unterschiedlich ausfallen: "Ich suche ein Cabrio von einem privaten Vorbesitzer.", "Wohnung gesucht. Bitte keine Makler.", "Nur Händler aus der EU.", "Angebote bitte nur mit ausweisbarer Mehrwertsteuer.".

Erfindungsgemäß kann vorgesehen sein, dass in der Analysephase die Bestimmung des konkreten Handlungstyps aus einer Vielzahl möglicher gespeicherter Handlungstypen durch rechnergestützte Abfrage und Vergleich des semantischen Netzes mit lexikalischen Daten über Verben und deren Nominalisierungen oder Verbformen erfolgt. Dabei können proprietäre oder Internet-basierte Datenbanken abgefragt werden, in denen mögliche Verben und deren Ableitungen gespeichert sind.

Erfindungsgemäß kann vorgesehen sein, dass in der Suchphase die Bestimmung komplementärer Handlungstypen durch rechnergestützte Abfrage von Datenbanken unter Berücksichtigung semantischer Regeln erfolgt, wobei in den Datenbanken eine Vielzahl konkreter Handlungstypen und deren komplementärer Handlungstypen gespeichert sind. Zu diesem Zweck kann ein eigenes Programmmodul, der sogenannte Komplementierer, vorgesehen sein. Der Komplementierer kann insbesondere formale semantische Regeln einsetzen, um die komplementären Handlungstypen zu bestimmen.

Zur Bestimmung komplementärer Handlungstypen können im Komplementierer vorzugsweise semantische Relationen implementiert sein, die beispielsweise aus den sprachlichen Eingaben "Wenn der x den y an den z vermietet, dann mietet der z den y vom x" die komplementären Handlungstypen "mieten" - "vermieten" in ihren unterschiedlichen Verbformen extrahieren kann.

Erfindungsgemäß kann vorgesehen sein, dass in der Suchphase die ermittelten passenden Netze, also jene Netze mit komplementären Handlungstypen, auf Grundlage einer Gewichtung des Intentionsobjektes und der Intentionsfacetten der zuzuordnenden Intention gereiht werden. Insbesondere kann vorgesehen sein, dass die passenden Netze entsprechend ihrer Übereinstimmung im Intentionsobjekt sowie in höher gewichteten Intentionsfacetten gereiht werden. Beispielsweise kann in einer Intention die Intentionsfacette "Ort" höher gewichtet werden als die Intentionsfacette "Kompensation", da der Intendant möglicherweise gewillt ist, einen höheren Preis zu zahlen, aber sicher nicht einen anderen Ort akzptiert. Somit werden jene passenden Netze, die Übereinstimmung in höher gewichteten Intentionsfacetten aufweisen, höher gereiht, als andere passende Netze.

Erfindungsgemäß kann vorgesehen sein, dass die Gewichtungen des Intentionsobjekts und/oder der Intentionsfacetten durch den Benutzer vorgegeben werden können, wobei als Ausgangszustand eine Gleichgewichtung oder insbesondere eine erhöhte Gewichtung des Intentionsobjektes vorgesehen sein kann, da der Benutzer möglicherweise eine Abweichung in einer Intentionsfacette eher akzeptiert, als eine Abweichung im Intentionsobjekt.

Erfindungsgemäß kann vorgesehen sein, dass in der Suchphase die ermittelten passenden Netze auf Grundlage der semantischen und/oder lexikalischen Nähe des Intentionsobjekts und der Intentionsfacetten der zuzuordnenden Intention mit dem Intentionsobjekt und den Intentionsfacetten der passenden Netze gereiht werden. Beispielsweise weist das Intentionsobjekt "Ferienhaus" eine höhere semantische Nähe, also eine geringere semantische Distanz, zum Intentionsobjekt "Villa" auf, als zum Intentionsobjekt "Wohnung". Als lexikalische Nähe wird in diesem Zusammenhang, in Ergänzung der semantischen Nähe, eine Nähe von Begriffen bezeichnet, welche sich nicht nur aus der Semantik, sondern aus lexikalischem Wissen ergibt. So hat der Begriff "Bari" als Ortsangabe eine Nähe zum Begriff "Apulien", da die Stadt Bari in Apulien liegt. Auch der Begriff "Monet" hat als Angabe eines gesuchten Malers eine Nähe zum Begriff "Impressionismus", die sich nicht aus der Semantik, sondern aus lexikalischem Wissen ergibt. Um die lexikalische Nähe zu bestimmen, kann erfindungsgemäß vorgesehen sein, dass in der Suchphase Computer-Lexika oder Expertensysteme befragt werden.

Erfindungsgemäß kann vorgesehen sein, dass in der Suchphase die ermittelten passenden Netze gereiht werden, indem sowohl die Gewichtung des Intentionsobjekts und jeder Intentionsfacette, als auch die semantische Nähe des Intentionsobjekts und jeder Intentionsfacette der passenden Netze zum Intentionsobjekt und zu den jeweiligen Intentionsfacetten der zuzuordnenden Intention berücksichtigt wird.

Dabei kann insbesondere ein Score-Algorithmus ausgeführt werden, der die Form Score = w1 x (1 - d1) + w2 x (1 - d2) + ... + wn x (1 - dn) aufweist, wobei w1, w2, ..., wn die Gewichte im Bereich 0...1 und d1, d2, ..., dn die semantische Distanz im Bereich 0...1 des Intentionsobjekts und der einzelnen Intentionsfacetten bezeichnet, und die passenden Netze in der Reihenfolge des ermittelten Score-Werts angezeigt werden.

Erfindungsgemäß kann vorgesehen sein, dass in der Suchphase bei der Ermittlung passender Netze die semantische Distanz des komplementären Handlungstyps zum ermittelten Handlungstyp der zuzuordnenden Intention berücksichtigt wird, und passende Netze mit einer geringeren semantischen Distanz höher gereiht werden. Unterschiedliche Handlungstypen können zwar grundsätzlich zueinander komplementär, aber dennoch semantisch unterschiedlich zu bewerten sein. So ist der Handlungstyp "kaufe" grundsätzlich komplementär zu "verkaufe", "verleihe", "verpachte", weist aber größere semantische Nähe zum Handlungstyp "verkaufe" auf.

Bei den Intentionsfacetten kann es sich beispielsweise um die Facetten Agent (der Intendant), Agitatio (der Grund einer Intention), Aktand (das Haben des Intendanten und damit sein Status), Agendum (die Rolle des Intendanten in Bezug auf den Aktanden), das Agens (das Suchen des Intendanten), Aktant (das Gesuchte), Akteur (der gesuchte Co-Intendant, dessen Aktand dem eigenen Aktant entsprechen soll), die Aktion (die intendierte Transaktion) und das Aktum (als erstrebte Finalität gegenüber dem eigenen Status) handeln.

Erfindungsgemäß kann vorgesehen sein, dass neben den passenden sprachlichen Eingaben ein Grad an Übereinstimmung angezeigt wird, der auf Grundlage der ermittelten Reihung der passenden Netze berechnet wird. Dadurch wird es dem Benutzer ermöglicht, die Relevanz der verschiedenen passenden Intentionen zu beurteilen.

Erfindungsgemäß kann vorgesehen sein, dass zur Ermittlung der semantischen Netze eine Wissensrepräsentationsmethode unter Verwendung von MultiNet und der SEMPRIA-Search Technologie eingesetzt wird. Eine umfassende Beschreibung der vorzugsweise verwendeten SEMPRIA-Search Technologie ist auf der Website www.sempria.de verfügbar.

Erfindungsgemäß kann vorgesehen sein, dass die Intendanten der ermittelten passenden Intentionen automatisch von der Passung benachrichtigt und insbesondere an einen vorbestimmten Dienst zur Verarbeitung der gewünschten Transaktion weitergeleitet werden.

Die Erfindung betrifft weiters ein System, vorzugsweise internetbasierter Dienst und insbesondere Internetportal, zur Ausführung des erfindungsgemäßen Verfahrens.

Erfindungsgemäß kann bei diesem erfindungsgemäßen System vorgesehen sein, dass zur Verbindung der Intendanten der Intentionen Kommunikations- und/oder Verwaltungsmittel vorgesehen sind, insbesondere ein Kommunikationsmodul, ein Identifikationsmodul, ein Verifikationsmodul, ein Zahlungsmodul, ein Logistikmodul, ein Versandmodul, ein Kollaborationsmodul und/oder ein personalisiertes Verwaltungsmodul zur Verwaltung der je eigenen Nutzerdaten, Einstellungen, Intentionen, Passungen, Historie, und/oder weiterer Daten.

Durch das erfindungsgemäße Verfahren findet das heutige Internet eine sinnvolle Erweiterung ("Unifield"), die als Serve Engine (statt Search Engine) und Dienst (statt Plattform) ermöglicht, dass der Nutzer seine Intentionen schnell und einfach als Ganzes übergeben kann und aktiv (statt interaktiv) die entsprechende Passung findet (statt sucht). Das World Wide Web in all seinen multimedialen Ausprägungen (Content) kommt hierbei als Anhang zu einer jeweiligen Intention (Intent) zur Anwendung.

Das erfindungsgemäße Verfahren kann insbesondere als internetbasierter Dienst zur automatisierten Verarbeitung natürlichsprachlicher Eingaben in Wort und Schrift ausgeführt sein, wobei auf der Grundlage von Intentionen, als eine nächste emergente Stufe von Elementarinformation(en), jede einzelne und spezifische Eingabe beispielsweise einer Intention eines jeweiligen Nutzers mit geeigneten Methoden (z.B. Wissensrepräsentationsmethoden wie Datenmodelle, Semantische Netze, Prädikatenlogik etc.) in alle möglichen Sachverhalte und Konstituenten einer idealtypischen Intention semantisch disambiguiert und facettiert wird.

Dem Benutzer wird durch das erfindungsgemäße Verfahren die insgesamt bestmögliche Entsprechung seiner Intention als Ergebnis geliefert, sodass zwischen den zwei oder mehreren hiervon betroffenen Intendanten eine Verbindung in ihrem Anliegen hergestellt werden kann.

Erfindungsgemäß kann vorgesehen sein, dass zusätzlich zum typischen Nutzer mit je singulären Intentionen, auch (typischerweise gewerbliche) Nutzer mit permanenten Intentionen einen eigenen Zugang zum Gesamtsystem erhalten, um dauerhafte Intentionen zu platzieren und damit ziel- und passgenau Werbeanzeigen platzieren zu können, die für Nutzer mit singulären Intentionen die sich aus einer Reaktion zweier oder mehrerer Intentionen vorhersehbar sich ergebenden möglichen Folgeintentionen abbilden und befriedigen lassen.

Erfindungsgemäß kann vorgesehen sein, dass die Benutzer im Anhang einer sprachlichen Eingabe Inhalte aller Art hinterlegen, insbesondere Hyperlinks, Textdokumente, Bild-, Ton-, Filmdateien und Dateien aller anderen Arten.

Weitere vorteilhafte Ausgestaltungen der Erfindung ergeben sich aus den Ansprüchen, der Beschreibung der Ausführungsbeispiele und den Zeichnungen.

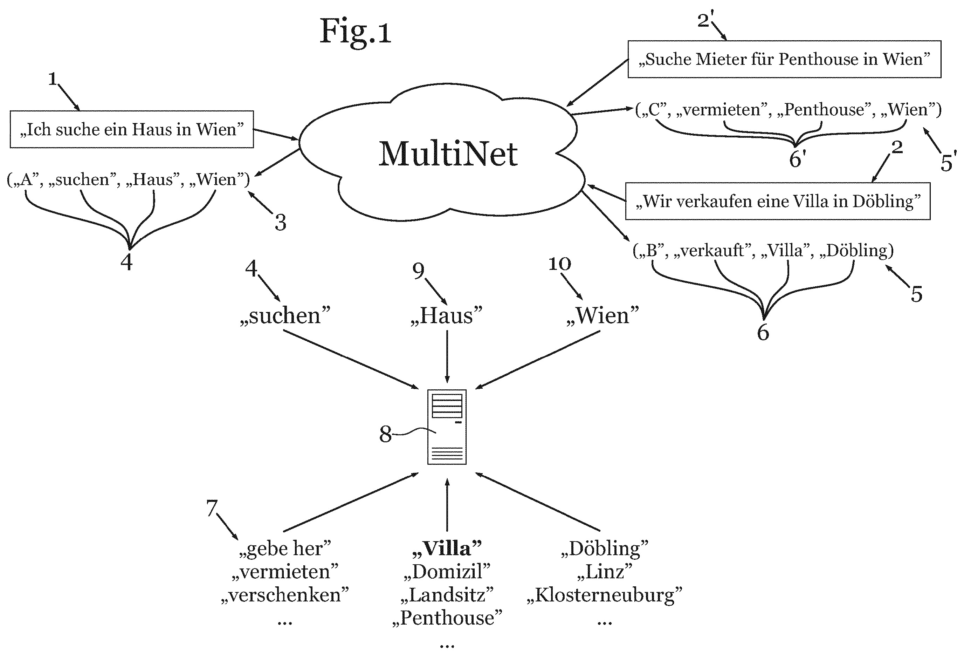

Fig. 1 zeigt ein vereinfachtes Ausführungsbeispiel eines erfindungsgemäßen Verfahrens. In diesem Ausführungsbeispiel stellt ein Benutzer A seine Intention in Form einer ersten sprachlichen Eingabe 1 zur Verfügung. Diese sprachliche Eingabe stellt eine Intention dar, nämlich dass Benutzer A ein Haus in Wien sucht. Gleichzeitig sind im System bereits Intentionen anderer Benutzer B, C in Form zweiter sprachlicher Eingaben 2, 2' vorhanden. Auch diese sprachlichen Eingaben stellen Intentionen dar, nämlich dass die Benutzer B und C unterschiedliche Immobilien zu unterschiedlichen Bedingungen zur Verfügung stellen. Die Intentionen werden im System nach Durchlaufen der Analysephase als semantische Netze abgelegt, wobei sowohl das jeweilige Intentionsobjekt ("Penthouse", "Villa"), als auch die jeweiligen Intentionsfacetten ("Wien", "Döbling") in Datenbanken hinterlegt sind.

Sowohl die erste sprachliche Eingabe 1, als auch die zweiten sprachlichen Eingaben 2, 2' werden in der Analysephase unter Verwendung eines semantischen Interpreters in ihre einzelnen Elemente 4, 6, 6' aufgespalten, und es werden ein erstes semantisches Netz 3 sowie zweite semantische Netze 5, 5' gebildet. In der vorliegenden Darstellung sind die semantischen Netze vereinfacht als Vektoren dargestellt, in der tatsächlichen Implementierung erfolgt die Speicherung der semantischen Netze durch speziell dafür vorgesehene oder implementierte Datenobjekte.

Danach werden für den ermittelten Handlungstyp "suchen" des ersten semantischen Netzes 3 jene komplementären Handlungstypen 7 ermittelt, die aus Sicht des Benutzers zu einer Transaktion integrierbar sind. Dabei handelt es sich im vorliegenden Beispiel, bei dem der Handlungstyp "suchen" lautet, beispielsweise um die Elemente "verkaufen", "vermieten", "verschenken", da diese im Sinne des Benutzers zu einer Reaktion, eben dem Erlangen einer Immobilie, integrierbar sind. Alle gespeicherten semantischen Netze mit diesen Handlungstypen werden ausgewählt.

Danach werden für das Intentionsobjekt 9 der zuzuordnenden Intention semantische Netze mit identischem oder semantisch ähnlichem Intentionsobjekt gesucht. Im vorliegenden Beispiel sind semantische Netze mit den Intentionsobjekten "Villa", "Domizil", "Landsitz" und "Penthouse" in der Datenbank abgespeichert. Der Begriff "Villa" weist zum Begriff "Haus" die größte semantische Nähe auf.

Im nächsten Verfahrensschritt werden die Intentionsfacetten betrachtet. Im vorliegenden Beispiel weist die zuzuordnende Intention nur eine ortsbezogene Intentionsfacette 10 auf, nämlich den Ort der Suche "Wien".

In den gespeicherten semantischen Netzen finden sich im vorliegenden Ausführungsbeispiel die Intentionsfacetten "Döbling", "Linz" und "Klosterneuburg". Wiederum wird die semantische Nähe analysiert, wobei in diesem Fall keine semantischen Gemeinsamkeiten oder Unterschiede festgestellt werden können. Somit wird die lexikalische Distanz betrachtet, und es wird festgestellt, dass der Begriff "Döbling" die geringste lexikalische Distanz zum Suchbegriff "Wien" aufweist, da Döbling ein Wiener Bezirk ist. Der Begriff "Klosterneuburg" weist eine höhere Distanz auf, da Klosterneuburg ein Vorort von Wien ist. Schließlich weist der Begriff "Linz" die höchste Distanz auf, da der Intendant mit Sicherheit nicht an einem Haus in Linz interessiert ist. Zur Berechnung der Distanz wird natürlich ein Rechner 8 eingesetzt, der über Schnittstellen zu Computerdatenbanken oder Expertensystemen verfügt.

Der Benutzer erhält als Ausgabe schließlich die den ermittelten passenden semantischen Netzen entsprechenden sprachlichen Eingaben.

In einem weiteren, nicht dargestellten Ausführungsbeispiel eines erfindungsgemäßen Verfahrens stellt ein erster Benutzer P die folgende Intention ein: "Ich verkaufe meine 3 Jahre alte Vespa GT 125 für 6.598 Euro. Das Schmuckstück ist eine Sonderanfertigung im Martini-Design, mit Malossi-Variomatik, inklusive Helm im Martini-Design." Aus dieser sprachlichen Eingabe wird, wie beschrieben, in der Analysephase ein semantisches Netz gebildet.

Ein zweiter Benutzer L stellt die Intention ein: "Für meine Frau suche ich nach einem besonderen Roller, der nicht mehr als 7.000 Euro kosten soll, idealerweise ein Einzelstück oder eine Seltenheit." Aus dieser Intention wird, wie oben beschrieben, in der Analysephase ein zweites semantisches Netz gebildet. Der Vergleich der semantischen Netze in der Suchphase ergibt eine Passung, sodass die Benutzerintentionen zusammengeführt werden können.

In einem weiteren, nicht dargestellten Ausführungsbeispiel eines erfindungsgemäßen Verfahrens verfasst ein erster Benutzer A die Intention "Auf unserem Reiterhof in Mauerbach geben wir auf unseren Freibergern Reitunterricht zu 38 Euro die Stunde. Am Samstag um 14 Uhr für Anfänger, am Sonntag um 12 Uhr Westernreiten für Fortgeschrittene".

Ein zweiter Benutzer E verfasst die Intention "Ich möchte im Umkreis von Wien für unter 40 Euro die Stunde auf einem Reiterhof mit Freibergern das Reiten erlernen, mit der Option zum Westernreiten".

Weiters ist eine dritte, dauerhafte Intention in folgender Form hinterlegt: "Reitbedarf Müller: Meine Anzeige soll bei allen erscheinen, die in Wien und Umgebung das Reiten erlernen wollen".

Durch das oben beschriebene Verfahren werden aus den eingegebenen Intentionen einzelne semantische Netze mit Elementen erzeugt und gespeichert, und es wird eine Passung der Benutzer festgestellt sowie in Folge die Benutzerintentionen zusammengeführt. Dabei wird auch für die dritte, dauerhafte Intention eine Passung festgestellt, sodass die Benutzer A und E auch mit dem dritten Benutzer zusammengeführt werden.

In einem weiteren, nicht dargestellten Ausführungsbeispiel eines erfindungsgemäßen Verfahrens verfasst ein erster Benutzer M die Intention "Könnte jemand der Checkrobin-Community innerhalb der nächsten drei Tage zwei größere Pakete von Verona, Italien, nach Wien mitbringen?" Ein zweiter Benutzer S verfasst die Intention "Ich fahre morgen von Verona zurück nach Wien und könnte jemanden oder auch irgendetwas mitnehmen".

Schließlich ist im Verfahren hinterlegt, dass für bestimmte Intentionsfacetten, beispielsweise "Mitfahrgelegenheit" oder "Mitbringen", die Intentionen bzw. deren Elemente an vorbestimmte Dienste weitergeleitet werden. Diese Dienste können in Form dritter Intentionen hinterlegt sein.

Im vorliegenden Ausführungsbeispiel werden zunächst die Benutzer M und S zusammengeführt, und danach werden deren Daten aufgenommen und automatisch an den vorbestimmten Dienst, dessen Intention als für das Element "Mitfahrgelegenheit" passend ermittelt wurde, weitergeleitet.

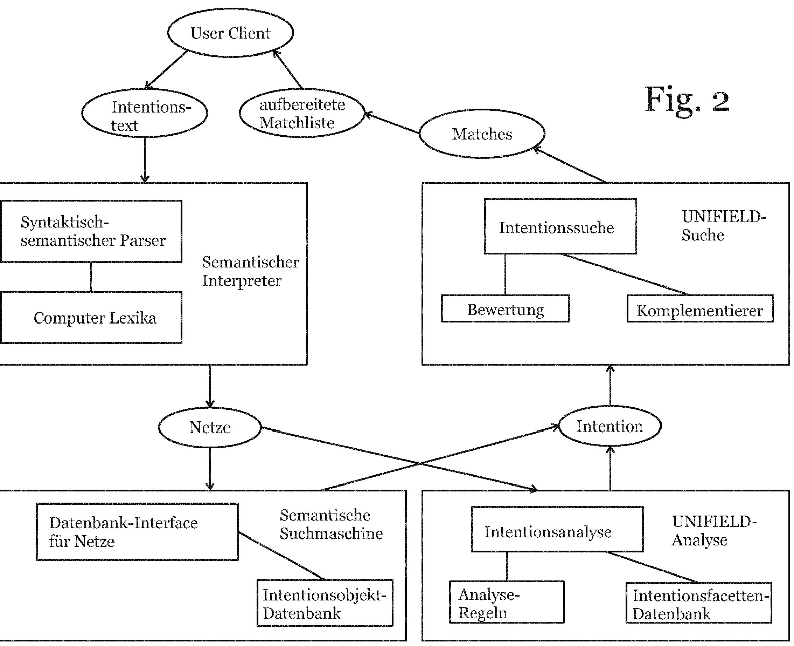

Fig. 2 zeigt eine Ausführungsform einer Systemarchitektur zur Ausführung eines erfindungsgemäßen Verfahrens. Der Intentionstext wird von einem User Client an einen semantischen Interpreter übermittelt, der unter Zuhilfenahme eines syntaktischsemantischen Parsers und Computer-Lexika die semantischen Netze erzeugt. Die semantische Suchmaschine extrahiert das der Intention zugrundeliegende Intentionsobjekt.

Die UNIFIELD-Analyse analysiert die Intentionen und erstellt die Intentionsfacetten-Datenbank nach vorgegebenen Analyseregeln. Schließlich ist die Suchphase in der UNIFIELD-Suche implementiert, in der der Komplementierer die komplementären Handlungstypen ermittelt und den Score für die passenden Intentionen berechnet. Alle passenden Intentionen werden als aufbereitete und gereihte Matchliste an den User Client weitergeleitet.

Eine beispielhafte Implementierung der erfindungsgemäßen Analysephase kann in Pseudocode wie folgt beschrieben werden:

```
 form := parse(t) // natürlichsprachliche Analyse von t
 handlungstyp := bestimme_handlungstyp(form)
                    // mittels semantischer Regeln und lexikalischem Wissen über
                    // Verben und deren Nominalisierungen
                    form := entferne_handlungstyp(form, handlungstyp)
                    // reduziere 'form' um die Handlungstyp-Beschreibung
                    facette_kompens := extrahiere_kompensation(form)
                    form := entferne_kompens(form, facette_kompens)
                    facette_zeit := extrahiere_zeit(form)
                    form := entferne_zeit(form, facette_zeit)
                    facette_partner := extrahiere_partner(form)
                    form := entferne_partner(form, facette_partner)
                    // ... Extraktion weiterer Intentionsfacetten
                    facette_objekt := form // form enthält nun die Objekt-Facette der Intention
 index(i, t, handlungstyp, facette_objekt, facette_kompens, facette_zeit, ...)
 // indiziere den Intentionstext t anhand alle oben bestimmter Facetten über einen
 // auf semantische Netze spezialisierten Graphindex.
```

Als Resultat dieser Implementierung der Analysephase wird eine aktualisierte Intentionsobjekt-Datenbank und eine aktualisierte Intentionsfacetten-Datenbank geliefert.

Eine beispielhafte Implementierung der erfindungsgemäßen Suchphase könnte in Pseudocode wie folgt aussehen:

```
 (handlungstyp, facette_objekt, facette_kompens, facette_zeit,...) := lade_analyse(i)
 kompl_handlungstypen := bestimme_komplementäre(handlungstyp)
 g := bestimme_gewichtsvektor(facette_objekt, facette_kompens, facette_zeit,...)
 passungen := suche(kompl_handlungstypen, facette_objekt, facette_kompens, ..., g)
       // matche alle Facetten der Intention i mit allen gespeicherten Intentionen
       // Dabei wird Facette für Facette abgeglichen auf Ebene der semantischen
       // Netze. Bewertungen der Passung (aus dem Intervall [0,1]) werden berechnet
       // anhand des Gewichtsvektors g; Abgleiche werden abgebrochen, wenn die
       // noch erreichbare Bewertung unter eine untere Schranke m, die auch der
       // Nutzer festlegen kann, fällt. Indices für Relationen aus semantischen Netzen
       // und Spezialindizes (z.B. für formalisierte Zeiten, Zeitintervalle, Preise)
       // kommen zum Einsatz, um die Rechenzeit zu reduzieren.
```

Als Resultat erhält man eine Liste von Matches, geordnet nach absteigender Bewertung. Jeder einzelne Match enthält einen Vektor, in dem die Matches pro Intentionsfacette verzeichnet sind, so dass der User Client informative Erläuterungen über das, was passt und was nicht passt, ausgeben kann.

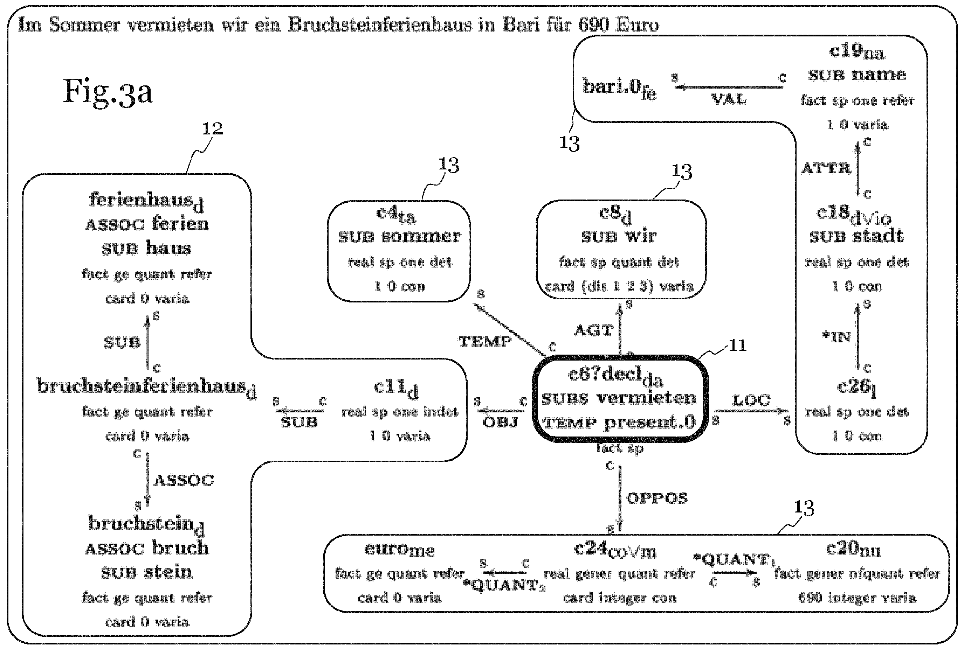

Abschließend sei eine realistische Intention im Gesamtsystem durchgespielt: "Im Sommer vermieten wir ein Bruchsteinferienhaus in Bari für 690 Euro pro Woche." Die semantische Repräsentation als semantisches Netz, welche der semantische Interpreter liefert, ist vereinfacht in Fig. 3a wiedergegeben. Die semantischen Netze umfassen den Handlungstyp 11 "vermieten" bzw. "suchen", das Intentionsobjekt 12 "Bruchsteinferienhaus", welches die Eigenschaften "Ferienhaus" und "Bruchstein" umfasst, sowie die Intentionsfacetten 13 in Form der zeitlichen Angabe "Sommer", der örtlichen Angabe "Bari", der Kompensation "690 Euro pro Woche" und des Intendanten der Intention "Wir".

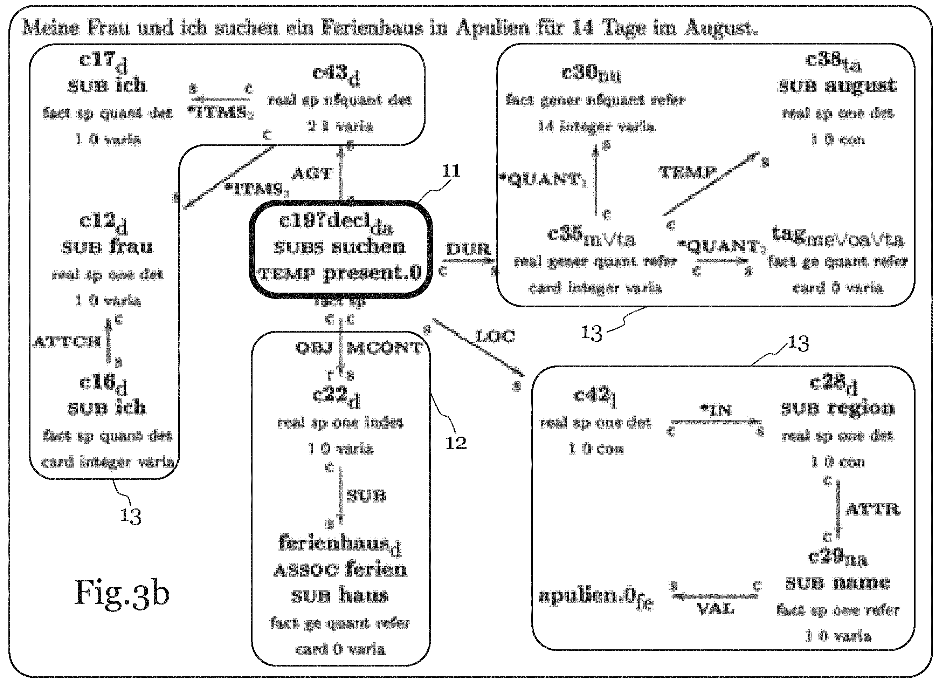

Typisch für Intentionen ist, dass mehrere Intentionsfacetten angesprochen werden, hier Zeit, Ort, Preis, Objekt. Die Analysephase identifiziert alle Facetten in der oben spezifizierten Weise. Dies ermöglicht der Suchphase, folgende perfekt passende Intention aus Millionen von anderen Intentionen wiederzufinden: "Meine Frau und ich suchen ein Ferienhaus in Apulien für 14 Tage im August." Die semantische Repräsentation dieser Intention vom Handlungstyp "Mieten" wurde während der Analysephase automatisch erzeugt und ist in Fig. 3b dargestellt.

Die Passung zwischen den beiden Intentionen kann auf der Ebene des Handlungstyps und der angesprochenen Intentionsfacetten vereinfacht so dargestellt werden:
Handlungstyp: "Vermieten" MATCH/KOMPLEMENTÄR "Mieten"
Objekt: "Bruchsteinferienhaus" MATCH/BIETE-SUCHE "Ferienhaus"
Ort: "in Bari" MATCH/BIETE-SUCHE "in Apulien"
Zeit: "im Sommer" MATCH/BIETE-SUCHE "im August"

Die Erfindung beschränkt sich nicht auf die vorliegenden Ausführungsbeispiele, sondern umfasst sämtliche Verfahren und Systeme im Rahmen der nachfolgenden Patentansprüche.

## Patentansprüche

1. Rechnerimplementiertes Verfahren zur Zuordnung einer ersten Intention in Form einer ersten sprachlichen Eingabe in einen Rechner zu zumindest einer passenden Intention in Form einer zweiten sprachlichen Eingabe in einen Rechner, wobei die Intentionen als Datenobjekte implementiert sind und jeweils zumindest ein Intentionsobjekt, einen Handlungstyp und zumindest eine Intentionsfacette umfassen, und wobei das Verfahren eine Analysephase und eine darauf folgende Suchphase umfasst, **dadurch gekennzeichnet, dass**
a. in der Analysephase
i. aus einer Intention durch einen semantischen Interpreter ein semantisches Netz gebildet wird,
ii. aus dem semantischen Netz der konkrete Handlungstyp der Intention bestimmt wird,
iii. aus dem semantischen Netz die Intentionsfacetten extrahiert und in einer Intentionsfacetten-Datenbank gespeichert werden,
iv. aus dem semantischen Netz das Intentionsobjekt bestimmt und in einer Intentionsobjekt-Datenbank gespeichert wird,
v. das semantische Netz in einer Graph-Datenbank abgelegt und zur schnelleren Auffindung durch ein Graph-Indizierungsverfahren indiziert wird,
b. wobei die Analysephase vorab mit einer Vielzahl von Intentionen und danach mit der zuzuordnenden Intention durchlaufen wird, und
c. in der Suchphase
i. zum ermittelten Handlungstyp der zuzuordnenden Intention eine Vielzahl komplementärer Handlungstypen bestimmt werden,
ii. aus den in der Graph-Datenbank gespeicherten semantischen Netzen jene passenden Netze ausgewählt werden, welche einen komplementären Handlungstyp aufweisen, und
iii. die diesen passenden Netzen entsprechenden sprachlichen Eingaben ausgegeben werden.

2. Verfahren nach Anspruch 1, **dadurch gekennzeichnet, dass** in der Analysephase das Intentionsobjekt bestimmt wird, indem das semantische Netz um den ermittelten Handlungstyp und alle ermittelten Intentionsfacetten reduziert wird.

3. Verfahren nach Anspruch 1 oder 2, **dadurch gekennzeichnet, dass** als Intentionsfacetten zumindest eine Kompensation, vorzugsweise ein Preis, eine zeitliche Einschränkung, eine örtliche Einschränkung und vorzugsweise ein gewünschter Intentionspartner vorgesehen sind.

4. Verfahren nach einem der Ansprüche 1 bis 3, **dadurch gekennzeichnet, dass** in der Analysephase die Bestimmung des konkreten Handlungstyps aus einer Vielzahl möglicher gespeicherter Handlungstypen durch rechnergestützte Abfrage und Vergleich des semantischen Netzes mit lexikalischen Daten über Verben und deren Nominalisierungen erfolgt.

5. Verfahren nach einem der Ansprüche 1 bis 4, **dadurch gekennzeichnet, dass** in der Suchphase die Bestimmung komplementärer Handlungstypen durch rechnergestützte Abfrage von Datenbanken unter Berücksichtigung semantischer Regeln erfolgt, wobei in den Datenbanken eine Vielzahl konkreter Handlungstypen und deren komplementärer Handlungstypen gespeichert sind.

6. Verfahren nach einem der Ansprüche 1 bis 5, **dadurch gekennzeichnet, dass** in der Suchphase die ermittelten passenden Netze auf Grundlage einer Gewichtung des Intentionsobjekts und der Intentionsfacetten der zuzuordnenden Intention gereiht werden, wobei die passenden Netze entsprechend ihrer Übereinstimmung im Intentionsobjekt und in höher gewichteten Intentionsfacetten gereiht werden.

7. Verfahren nach einem der Ansprüche 1 bis 6, **dadurch gekennzeichnet, dass** in der Suchphase die ermittelten passenden Netze auf Grundlage der semantischen und/oder lexikalischen Nähe des Intentionsobjekts und der Intentionsfacetten der zuzuordnenden Intention mit dem Intentionsobjekt und den Intentionsfacetten der passenden Netze gereiht werden.

8. Verfahren nach Anspruch 7, **dadurch gekennzeichnet, dass** in der Suchphase die ermittelten passenden Netze gereiht werden, indem sowohl die Gewichtung des Intentionsobjekts und jeder Intentionsfacette, als auch die semantische Nähe des Intentionsobjekts und jeder Intentionsfacette der passenden Netze zum Intentionsobjekt und den jeweiligen Intentionsfacetten der zuzuordnenden Intention, insbesondere durch Berechnung eines Score-Werts, berücksichtigt wird.

9. Verfahren nach einem der Ansprüche 1 bis 8, **dadurch gekennzeichnet, dass** in der Suchphase bei der Ermittlung passender Netze die semantische Distanz des komplementären Handlungstyps zum ermittelten Handlungstyp der zuzuordnenden Intention berücksichtigt wird, und passende Netze mit einer geringeren semantischen Distanz höher gereiht werden.

10. Verfahren nach einem der Ansprüche 1 bis 9, **dadurch gekennzeichnet, dass** die Intentionen Angaben über
a. den Agenten oder Intendanten der Intention,
b. den Grund der Intention,
c. den Aktanden oder das Haben des Intendanten,
d. das Agendum oder die Rolle des Intendanten,
e. das Agens oder das Suchen des Intendanten,
f. den Aktant oder das Gesuchte,
g. den Akteur oder den gesuchten Co-Intendanten, dessen Aktand dem eigenen Aktant entsprechen soll,
h. Aktion oder intendierte Transaktion und/oder
i. das Aktum als erstrebtes Resultat umfassen.

11. Verfahren nach einem der Ansprüche 6 bis 10, **dadurch gekennzeichnet, dass** neben den passenden sprachlichen Eingaben ein Grad an Übereinstimmung angezeigt wird, der auf Grundlage der ermittelten Reihung der passenden Netze berechnet wird.

12. Verfahren nach einem der Ansprüche 1 bis 10, **dadurch gekennzeichnet, dass** zur Ermittlung der semantischen Netze eine Wissensrepräsentationsmethode unter Verwendung von MultiNet und der SEMPRIA-Search Technologie eingesetzt wird.

13. Verfahren nach einem der Ansprüche 1 bis 12, **dadurch gekennzeichnet, dass** die Intendanten der ermittelten passenden Intentionen automatisch von der Passung benachrichtigt und insbesondere an einen vorbestimmten Dienst zur Verarbeitung der gewünschten Transaktion weitergeleitet werden.

14. System, vorzugsweise internetbasierter Dienst und insbesondere Internetportal, zur Ausführung eines Verfahrens nach einem der Ansprüche 1 bis 13.

15. System nach Anspruch 14, **dadurch gekennzeichnet, dass** zur Verbindung der Intendanten der Intentionen Kommunikations- und/oder Verwaltungsmittel vorgesehen sind, insbesondere ein Kommunikationsmodul, ein Identifikationsmodul, ein Verifikationsmodul, ein Zahlungsmodul, ein Logistikmodul, ein Versandmodul, ein Kollaborationsmodul und/oder ein personalisiertes Verwaltungsmodul zur Verwaltung der je eigenen Nutzerdaten, Einstellungen, Intentionen, Passungen, Historie, und/oder weiterer Daten.
